# EUROPÄISCHE PATENTSCHRIFT

(11) **EP 1 576 713 B1**
(45) Veröffentlichungstag und Bekanntmachung des Hinweises auf die Patenterteilung: **02.09.2009**
(21) Anmeldenummer: 03795882.4
(22) Anmeldetag: 11.12.2003
(51) Int. Cl.: H02K 7/102, F16D 59/00

(54) **ADAPTER, GETRIEBEMOTOR UND GETRIEBEMOTOR-BAUKASTEN**
ADAPTER, GEAR MOTOR AND MODULAR GEAR MOTOR SYSTEM
ADAPTATEUR, ELECTROREDUCTEUR ET BOITIER D'ELECTROREDUCTEUR

(30) Priorität: 19.12.2002 DE 10260078; 11.02.2003 DE 10305434; 18.11.2003 DE 10353909
(43) Veröffentlichungstag der Anmeldung: 21.09.2005
(73) Patentinhaber: SEW-Eurodrive GmbH & Co, 76646 Bruchsal (DE)
(72) Erfinder: DENEFLEH, Roland, 64683 Einhausen (DE); HESS, Andreas, 76467 Bietigheim (DE); HÜTTIGER, Alexander, 76189 Karlsruhe (DE); MEGERLE, Jürgen, 76694 Forst (DE); ZIMMERMANN, Heinrich, 76646 Bruchsal (DE)
(86) Internationale Anmeldenummer: PCT/EP2003/014038
(87) Internationale Veröffentlichungsnummer: WO 2004/057732

(56) Entgegenhaltungen:
- EP-A1- 0 761 925
- DE-A1- 3 139 221
- DE-A1- 3 840 281
- DE-C1- 19 935 196
- US-B1- 6 328 655

## Beschreibung

Die Erfindung betrifft einen Adapter, Getriebemotor und Getriebemotor-Baukasten.

Aus der DE 196 37 361 sind Adapter bekannt. Dabei dient der Adapter nur zur Ankoppelung eines Getriebes an einen Motor zwecks Bildung eines Getriebemotors. Dabei ist der Getriebemotor als Antrieb für Lifte, Bauaufzüge und Hubwerke verwendbar. Bei Stromausfall bewegt sich ein solcher Bauaufzug solange ungebremst, also durch die Schwerkraft beschleunigt, nach unten bis die Motorbremse des Elektromotors einfällt. Dabei ist ein solcher Elektromotors mit Bremse beispielsweise aus der DE 198 38 171 A1 bekannt, wobei die Bremse dort als eine elektromagnetisch betätigbare Bremse ausgeführt ist.

Aus der DE 31 39 221 A1 ist eine Haltebremse bekannt, bei der eine Fliehkraftkupplung verwirklicht ist.

Aus der EP 0 761 925 A1 ist eine Bremsvorrichtung bekannt, bei der fliehkraftabhärrgig der Bremsvorgang eingeleitet wird.

Aus der DE 199 35196 C1 ist ein bremsbarer elektrischer Antrieb bekannt, der eine zwischen Motor und Getriebe angeordnete Bremse aufweist.

Aus der US 6,328,655 B1 ist ein Adaptersystem bekannt, wobei der jeweilige Adapter zwei Gehäusehälften aufweist, die über ein im Adapter angeordnetes Lager zueinander zentriert werden.

Aus der DE 29 19 644 C2 ist eine Fliehkraft-Schaltkupplutlg bekannt.

Der Erfindung liegt daher die Aufgabe zugrunde, einen Getriebemotor derart weiterzubilden, dass die Sicherheit, insbesondere bei Liften, Bauaufzügen und Hubwerken in kostengünstiger Weise verbessert ist.

Erfindungsgemäß wird die Aufgabe bei dem Adapter mit den in Anspruch 1 angegebenen Merkmalen gelöst. Vorteilhafte Ausgestaltungen der Erfindung sind in den abhängigen Ansprüchen definiert.

Wichtige Merkmale der Erfindung bei dem Adapter sind, dass der Adapter zur Verbindung einer ersten Vorrichtung und einer zweiten Vorrichtung vorgesehen Ist,
wobei eine Welle der ersten Vorrichtung mit einem ersten Kupplungsteil des Adapters formschlüssig und/oder kraftschlüssig verbindbar ist,
wobei das erste Kupplungsteil mit einem zweiten Kupplungsteil zur Drehmomentübertragung zusammenwirkend vorgesehen ist,
wobei eine Adapterwelle mit dem zweiten Kupplungsteil des Adapters formschlüssig und/oder kraftschlüssig verbindbar ist,
wobei das Adaptergehäuse zur ersten Vorrichtung hin eine Schnittstelle aufweist zur lösbaren, zueinander zentrierbaren Verbindung mit dem Gehäuse der ersten Vorrichtung,
wobei das Adaptergehäuse abtriebsseitig eine weitere Schnittstelle aufweist zur lösbaren, zueinander zentrierbaren Verbindung mit einem Gehäuseteil der zweiten Vorrichtung, insbesondere mit einem Getriebe-Gehäusedeckel,
wobei auf dem zweiten Kupplungsteil von Federn zusammengehaltene Fliehbacken am Umfang angeordnet sind, mittels derer bei Überschreiten eines kritischen Wertes an Drehzahl und/oder Zentrifugalkraft ein Bremsbelag auf eine Reibfläche des Adaptergehäuses drückbar ist,
wobei die Fliehbacken derart arretierbar sind, dass der Bremsbelag nur auf die Reibfläche drückt, wenn ein Arretiermittel freigegeben ist und ein kritischer Wert an Drehzahl überschritten ist.

Von Vorteil ist dabei, dass bei freier Rotation des Getriebemotors, wie beispielsweise einem ungebremst nach unten fallenden Bauaufzug, also mit zunehmender Drehzahl rotierender Getriebemotor, eine Fliehkraftbremse nach Dearretierung eine Begrenzung der Fallgeschwindigkeit bewirkt und somit die Sicherheit erhöhbar ist. Außerdem ist die beim Bremsen entstehende Wärme dieser Fliehkraftbremse mittels des Adaptergehäuses an die Umgebung abführbar und das Adaptergehäuse hat nicht nur gehäusebildende Funktion, mechanische Funktion, wie Drehmoment- und/oder Kraftableitung, sondern auch die Funktion eines Bremslagerschildes sowie die genannte Wärmeableitfunktion.

Bei einer vorteilhaften Ausgestaltung ist die Adapterwelle mit mindestens einem Lager in einem Getriebe-Gehäuseteil, wie Getriebe-Gehäusedeckel oder Getriebe-Gehäuse, gelagert und abtriebsseitig mit einem Verzahnungsteil des Getriebes verbindbar. Von Vorteil ist dabei, dass der Getriebe-Gehäusedeckel zum Getriebe eine derartige Schnittstelle aufweist, dass die Adapterwelle sehr genau positionierbar, insbesondere zentrierbar, zum Getriebe und seinen Verzahnteilen hin ist. Darüber hinaus ist die Kupplung zwischen Motorwelle und Adapterwelle im Adaptergehäuse ermöglicht und nicht im Bereich zwischen den beiden, im Getriebe-Gehäusedeckel vorgesehenen Lagern positioniert. Von Fliehkraftbremse und Kupplung eingebrachte Kräfte und/oder Drehmomente sind daher kompensierbar im Bereich des Adaptergehäuses. Überraschend und besonders vorteilig ist bei der Erfindung, dass eine Innenfläche eines Gehäuseteils, das aus Stahl oder Grauguss fertigbar ist, als Reibfläche verwendbar ist und somit ein sonst dafür notwendiges Teil mit Reibfläche einsparbar ist.

Bei einer vorteilhaften Ausgestaltung sind die Fliehbacken derart arretierbar, dass der Bremsbelag nur dann auf die Reibfläche drückt, wenn ein Arretiermittel freigegeben ist. Von Vorteil ist dabei, dass verschiedenartige Sicherheitskonzepte für Bauaufzüge realisierbar sind. Dies bedeutet, dass auch Betriebsarten mit hohen, über dem genannten kritischen Wert liegenden Drehzahlen vorsehbar sind. Insbesondere ist die Fliehkraftbremse nur aktivierbar, wenn kein Arretieren ausgeführt ist.

Bei einer vorteilhaften Ausgestaltung ist als Arretiermittel eine Arretierglocke vorgesehen, die axial verschiebbar angeordnet ist, insbesondere auf einer Hülse, die am Umfang des ersten und zweiten Kupplungsteils angeordnet ist. Von Vorteil ist dabei, dass eine sehr kompakte Bauart erreichbar ist, insbesondere die Baulänge klein ist. Da die Kupplungsteile zur Ausführung der Kupplungsfunktion sowieso vorhanden sind, ist keine zusätzliche Baulänge für die Arretiervorrichtung der Fliehkraftbremse notwendig.

Bei einer vorteilhaften Ausgestaltung ist die Arretierglocke von einer Feder in eine axiale Richtung verschiebbar und mittels einer anderen Komponente oder Vorrichtung in die andere axiale Richtung verschiebbar. Von Vorteil ist dabei, dass die Feder als Druckfeder ausführbar und derart vorsehbar ist, dass bei kleinen Drehzahlen oder ruhendem Antrieb eine Arretierung erfolgt.

Bei einer vorteilhaften Ausgestaltung ist die Arretierglocke über ein Lager in einem relativ zum Adaptergehäuse nicht-drehbaren Teil, insbesondere in einem Schaltkörper, gelagert, wobei dieses nicht-drehbare Teil zusammen mit dem Lager und der Arretierglocke axial verschiebbar angeordnet ist. Von Vorteil ist dabei, dass in einfacher Weise das gesamte Lager mitverschiebbar ist und kein Spezial-Gleitlager oder dergleichen notwendig ist.

Bei einer vorteilhaften Ausgestaltung ist das nicht-drehbare Teil mittels eines Bowdenzuges verschiebbar. Von Vorteil ist dabei, dass ein technisch ausgereiftes, zuverlässiges und kostengünstiges Produkt einsetzbar ist.

Bei einer vorteilhaften Ausgestaltung ist der Bowdenzug mit einem Bremshebel derart verbunden, dass bei Betätigen, insbesondere Drehen, des Bremshebels zuerst die Arretierglocke zum Dearretieren, also Entriegeln, verschiebbar ist und bei weiter fortgesetztem Betätigen, insbesondere Drehen, ein Lüften der Motorbremse ausführbar ist. Von Vorteil ist dabei, dass vom Kunden insbesondere bei Bauaufzugsantrieben geforderte Sicherheitskonzepte realisierbar sind.

Bei einer vorteilhaften Ausgestaltung sind am ersten Kupplungsteil erste Klauen vorgesehen und am zweiten Kupplungsteil zweite Klauen vorgesehen sind, die mit den ersten Klauen im Eingriff stehen. Von Vorteil ist dabei, dass eine sichere, zuverlässige und robuste Art der Drehmomentübertragung realisierbar ist.

Wesentliche Merkmale der Erfindung bei dem Getriebemotor sind, dass er zumindest einen Elektromotor, einen Adapter und ein Getriebe umfasst, wobei der Adapter eine Fliehkraftbremse umfasst, wobei dem Bremsbelag eine innerhalb der Innenfläche des Adaptergehäuses vorgesehene Reibfläche zugeordnet ist. Von Vorteil ist dabei, dass kein zusätzliches Teil notwendig ist, dass das Adaptergehäuse als Reibfläche und zur Wärmeabfuhr verwendbar ist, insbesondere auch bei Verwendung von Gussmaterial.

Bei einer vorteilhaften Ausgestaltung umfasst der Elektromotor eine elektromagnetisch betätigbare Bremse, die eine Vorrichtung zum Lüften der Bremse, wie Bremshebel oder dergleichen, umfasst, wobei mittels der Vorrichtung zum Lüften der Bremse auch eine Arretierung der Fliehkraftbremse steuerbar ist. Von Vorteil ist dabei, dass verschiedene, vom Kunden bei Antrieben geforderte Sicherheitskonzepte realisierbar sind, insbesondere auch bei Antrieben von Bauaufzügen.

Weitere Vorteile ergeben sich aus den Unteransprüchen.

### Bezugszeichenliste

- 1: Motorgehäuse
- 2: Bremshebel
- 3: Motorflansch
- 4: Adaptergehäuseteil
- 5: Getriebe-Gehäusedeckel
- 6: Klemmenkasten
- 7: Haube für Motorbremse
- 8: Motorwelle
- 9: Adapterwelle
- 10: Rollenlager
- 11: Lager
- 12: Fliehbackenträger mit Klauen
- 13: Bremsbelag
- 14: Fliehbacken
- 15: Halteblech
- 16: Lager
- 17: Schaltkörper
- 18: Feder
- 19: Klauenkupplungsteil
- 20: Halteblech
- 21: Arretierglocke
- 22: Passfeder
- 23: Bowdenzug
- 24: Zugfedern für Fliehbacken
- 501: Getriebegehäusedeckel
- 502: Adapterwelle
- 503: Motorflansch
- 504: Adaptergehäuseteil
- 505: Lager
- 506: Lager
- 507: Motorwelle
- 508: Fliehbackenträger
- 509: Fliehbacken
- 510: Bremsbelag
- 511: Arretierglocke
- 512: Federelement
- 513: Lager
- 515: Kugel
- 516: Schalthebel
- 517: Koppel
- 518: Bremshebel
- 519: Hebelverlängerung
- 604: Adaptergehäuseteil
- 608: Fliehbackenträger
- 611: Arretierglocke
- 612: Federn
- 620: Spule
- 621: Spulenkörper
- 708: Fliehbackenträger
- 711: Arretierglocke
- 712: Federn
- 722: Mitnehmerkugel
- 723: Verriegelungseinheit
- 724: axiale Breite am Umfang
- 801: Getriebegehäusedeckel
- 802: Adapterwelle
- 803: Motorflansch
- 804: Adaptergehäuseteil
- 805: Lager
- 806: Lager
- 807: Motorwelle
- 808: Fliehbackenträger
- 809: Fliehbacken
- 810: Fliehbacken
- 811: Arretierglocke
- 812: Federelement
- 813: Lager
- 814: Schaltkörper
- 825: Nocke
- 826: Schenkel-Federn
- 827: Handhebel mit Griff
- 828: Druckstück
- 829: Schaltwelle
- 830: Deckel
- 831: Bolzen
- 832: Druckstange
- 833: Gelenk

Die Erfindung wird nun anhand von Abbildungen näher erläutert:

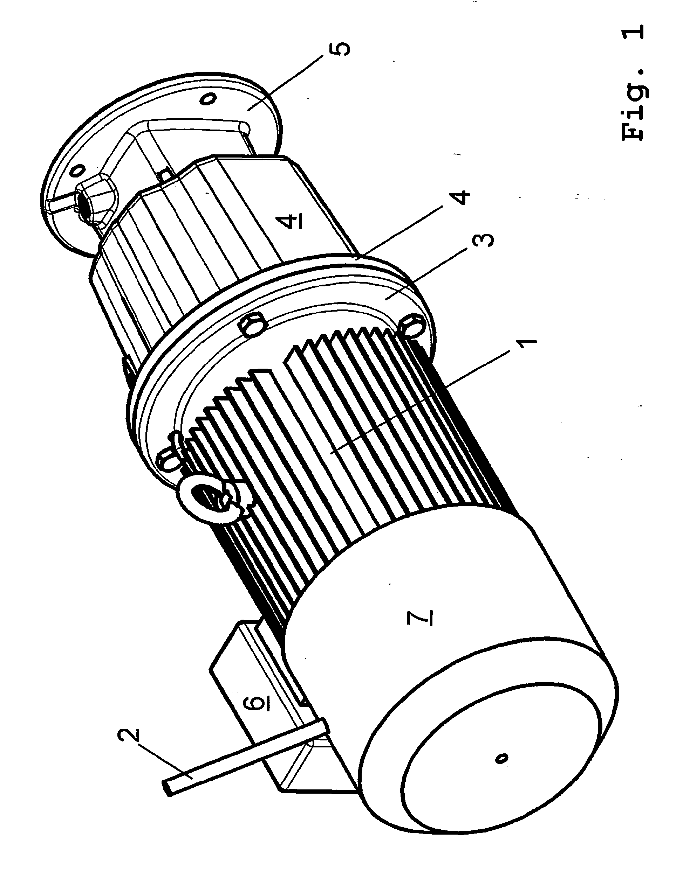

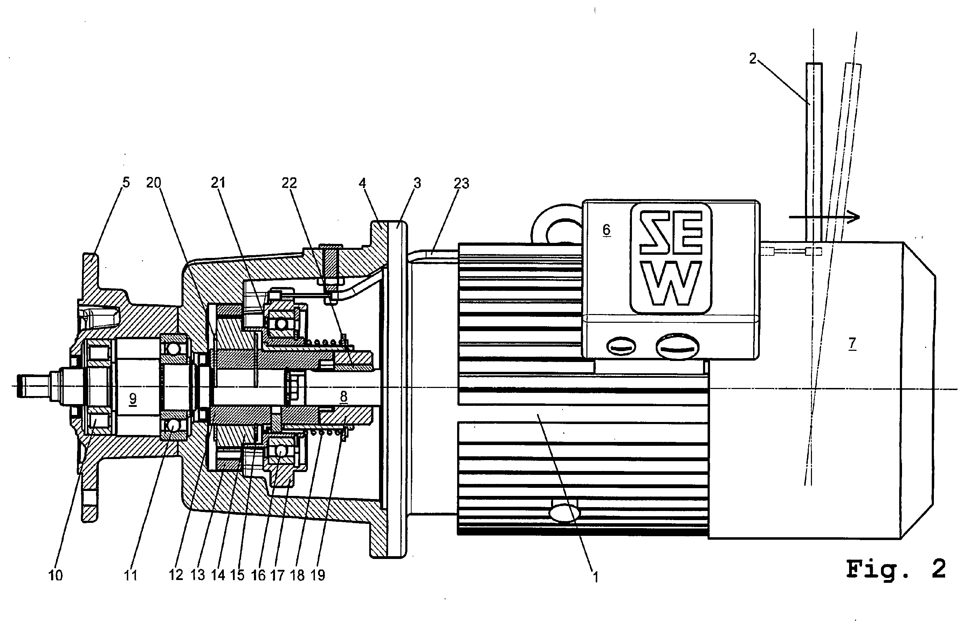

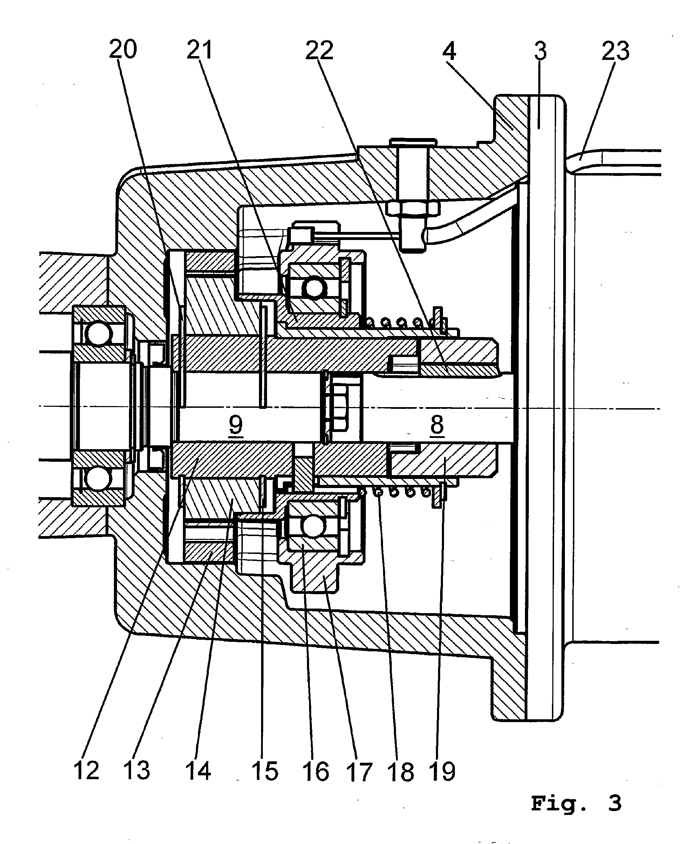

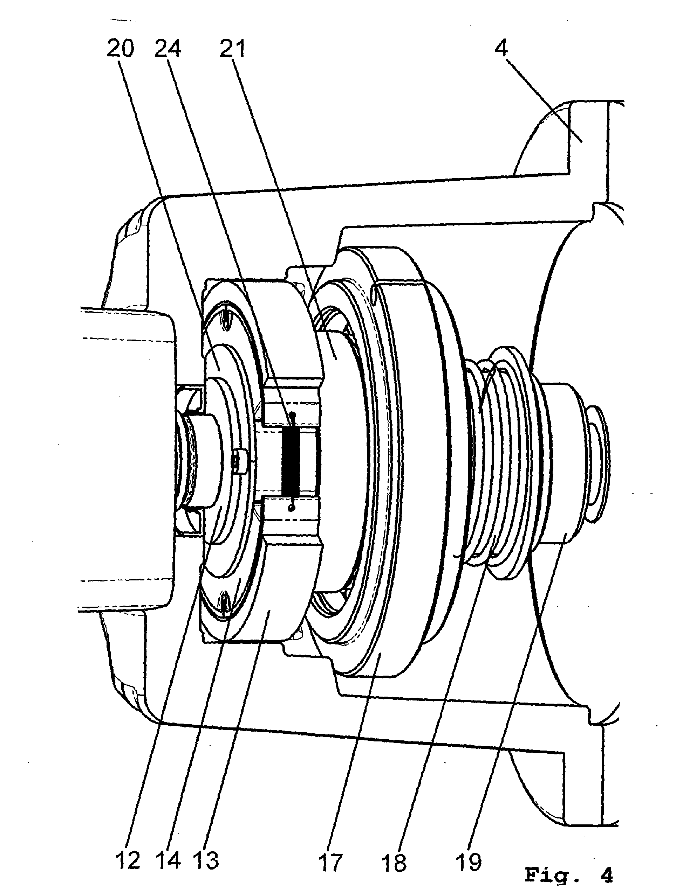

In der Figur 1 ist der Getriebemotor mit Adapter in einer 3D-Schrägansicht gezeigt. In Figur 2 ist ein Schnitt durch den Adapter gezeigt. In Figur 3 ist dieser Schnitt vergrößert dargestellt und in Figur 4 ist eine räumliche Ansicht in einen teilweise aufgeschnittenen Adapter zu sehen.

Der Motor ist als Bremsmotor ausgeführt, der ein Motorgehäuse 1, insbesondere ein Kühlrippen umfassendes, und eine Haube 7 für die B-seitig angeordnete Motorbremse umfasst, wobei die Bremse als elektromagnetisch betätigbare Bremse ausgeführt ist. Die Haube 7 ist auch verwendbar bei Motoren, die nicht nur eine B-seitige Bremse sondern zusätzlich noch B-seitige Geber und/oder Lüfter umfassen. Bei stromlosem Betrieb fällt die Bremse ein, weil Druckfedern eine Ankerscheibe der Bremse gegen einen Bremsbelagträger mit Bremsbelag drücken. Mittels eines Bremshebels 2 ist die Bremse lüftbar; dies ist derart ausgeführt, dass die Ankerscheibe und der Bremsbeiagträger mit Bremsbelag auseinander bringbar sind mittels des Betätigen eines Bremshebels und dann der Rotor des Elektromotors frei drehbar ist.

Bei der Erfindung ist mit diesem Bremshebel 2 ein Bowdenzug 23 verbunden, der zum Betätigen einer Arretierung einer A-seitig angeordneten, in einem Adapter integriert ausgebildeten und mit einer Adapterkupplung zusammenwirkenden Fliehkraftbremse vorgesehen ist.

Dabei ist bei Betätigen des Bremshebels 2 anfangs, also bei kleinen Drehwinkeln ein Leerweg vorhanden, in welchem zuerst die Arretierung frei gegeben wird, also entriegelt wird. Erst nach Überschreiten eines kritischen Drehwinkels wird die Motorbremse gelüftet

Der Elektromotor 1 weist elektrische Anschlussvorrichtungen für die elektrischen Versorgungsleitungen und die Bremsleitungen in seinem Klemmenkasten auf.

Der Motor 1 wird mittels seines Motorflansches 3 mit dem Adaptergehäuseteil 4 verbunden, der wiederum mit dem Getriebe-Gehäusedeckel 5 verbunden ist und hierzu eine entsprechende, genau gearbeitete Schnittstelle zur lösbaren Verbindung aufweist. Im Getriebe-Gehäusedeckel 5 sitzt ein Lager 11 und ein abtriebsseitig angeordnetes Lager, das vorteilhafterweise als Rollenlager 10 ausführbar ist. Mittels dieser Lager 10,11 ist die Adapterwelle 9 im Gehäuseteil 5 gelagert. Die Adapterwelle 9 ist mittels einer Klauenkupplung mit der Motorwelle 8, also der Rotorwelle, verbunden. Die Klauenkupplung besteht aus einem ersten und einem zweiten Kupplungsteil, die jeweils Klauen umfassen, die miteinander im Eingriff stehen. Das erste Kupplungsteil 19 ist mittels Passfeder 22 formschlüssig mit der Motorwelle 8 verbunden. Das zweite Kupplungsteil ist als Fliehbackenträger 12 mit Klauen ausgeführt.

Die Fliehbacken 14 sind am Umfang des zweiten Kupplungsteils angeordnet und von den Halteblechen (15,20) in ihrer axialen Position gehalten. In radialer Richtung sind die Fliehbacken 14 beweglich angeordnet, wobei allerdings die Fliehbacken 14 eine geblechte Verlängerung aufweisen und dort mittels am Umfang angeordneter Federn, nämlich mittels der in Figur 4 gezeigten Zugfedern 24 für Fliehbacken, zusammengehalten werden und nur bei Auftreten einer entsprechend großen Zentrifugalkraft die Federkraft überwinden und ihre radiale Position verändern können. Dabei verhindert aber die Arretierglocke 21 diese radiale Bewegung, wenn die Arretierung aktiv ist, also den in Figur 3 gezeigten Zustand aufweist. Denn die Arretierglocke 21 weist einen zylindrischen Endabschnitt auf, der am Außenumfang der Fliehbacken einen axialen Endabschnitt blockiert. Wird allerdings mittels des Bowdenzuges 23 der damit angeschlossene Schaltkörper 17 axial von den Fliehkörpern weg bewegt unter Überwindung der Federkraft der Feder 18, wird auch das Lager 16, über welches der nicht-mitdrehende Schaltkörper 17 an der Arretierglocke 21 gelagert ist, weg bewegt und somit dearretiert, also die Fliehbacken 14 frei gegeben. Die Feder 18 drückt die Arretierglocke 21 wieder in den Verriegelungszustand, also in den Zustand der Arretierung der Fliehbacken mittels der Arretierglocke, wenn der Bowdenzug keine Kraft mehr ausübt.

Ist die Arretierung also frei gegeben und überschreitet also die Drehzahl einen kritischen Wert und somit auch die Zentrifugalkräfte, werden die Fliehbacken 14 mit den auf ihnen vorgesehenen Bremsbelägen 13 auf einen Bereich der Innenfläche des Adaptergehäuses gedrückt. Dieser Bereich stellt somit eine Reibfläche dar. Das Adaptergehäuse weist also nicht nur Gehäusefunktion sondern auch die Funktion einer Reibfläche auf und sorgt für den Abtransport der Reibwärme, die beim Bremsen entsteht, an die Umgebung. Besonders vorteilhaft ist also ein Material verwendbar, das eine gute thermische Leitfähigkeit aufweist. Dabei ist wesentlich, dass der Motor hohe Betriebstemperaturen erreichen kann und somit eine Abfuhr der Wärme über den Bereich des Motors und das Motorgehäuse unvorteilhaft wäre. Vorteilhaft ist die Adaptergehäuseausfilhrung also dann, wenn der thermische Widerstand von der Reibfläche zur Umgebung geringer ist als der thermische Widerstand von der Reibfläche Ober den Innenbereich des Motors samt Rotor und über das Motorgehäuse zur Umgebung hin.

Der Bremshebels 2 ist mit dem Bowdenzug 23 mechanisch gekoppelt. In einer ersten Ausführungsform ist der Bowdenzug mit seinem Ende an den Bremszug direkt verbunden und wird somit sofort bei Drehen des Bremshebels 2 der Bowdenzug 23 betätigt. Das Lüften der Motorbremse erfolgt erst nach einem Drehen um einen bestimmten Mindestbetrag.

In Figur 2 ist eine Ausgangslage des Bremshebels 2 gezeigt und eine weitere, gestrichelt gezeichnete Lage.

Der genannte kritische Wert an Drehzahl oder Zentrifugalkraft ist bestimmt durch die konstruktive Ausformung und Auslegung, also auch Dimensionierung, aller Komponenten. Wesentlicher Vorteil bei der Erfindung ist somit, dass mittels dieser Auslegung der kritische Wert derart vorsehbar ist, dass er kleiner ist als die Betriebsdrehzahl, Mittels der Arretiermittel ist freigebbar, ob die Bremswirkung eintritt oder nicht. Je nach Dimensionierung ist es also ermöglicht, dass sogar bei sehr kleiner Drehzahl und entsprechender Schalthebelstellung die Fliehbacken Bremswirkung erzielen. Dies ermöglicht sehr verschiedene Anwendungsarten.

Bei anderen Ausführungsbeispielen ist auch eine Ausführung vorsehbar, bei der anfangs, also im Leerweg, erst die Bremse lüftbar ist und danach erst die Arretierung freigebbar ist. Alternativ sind auch Dearretieren und Lüften gleichzeitig vorsehbar. Es sind auch Ausführungsbeispiele vorsehbar, bei denen statt arretiert dearretiert wird. Statt eines Bowdenzuges sind auch technisch gleichwertige Kopplungen zwischen Bremshebel und Arretierglocke der Fliehkraftkupplung vorteilhaft ausführbar. Wesentlich ist, dass der mechanische Teil hierzu eine äquivalente Wirkweise aufweist. Auch ist statt der Klauenkupplung eine andere Kupplung nach Stand der Technik vorteilhaft verwendbar, wie beispielsweise Zahnkupplung oder andere form-, reib- und/oder kraftschlüssige Kupplungen.

Bei einer anderen vorteilhaften Ausführungsform ist sogar zwischen Motor 1 und Adapter, umfassend Adaptergehäuse 4 und Adapterwelle 9 eine Wärmesperre angeordnet.

Bei einem Baukasten oder einer Baureihe von Getriebemotoren ist es also ermöglicht, einen Adapter der beschriebenen Art, also mit einer durch Arretiermittel ausführbaren Schaltfunktion vorzusehen oder nicht. Bei Weglassen der Schaltfunktion ist das Adaptergehäuse mit einem Verschlussmittel versehen. Somit ist sogar eine Baureihe herstellbar, die Adapter mit oder ohne Verschlussmittel umfasst.

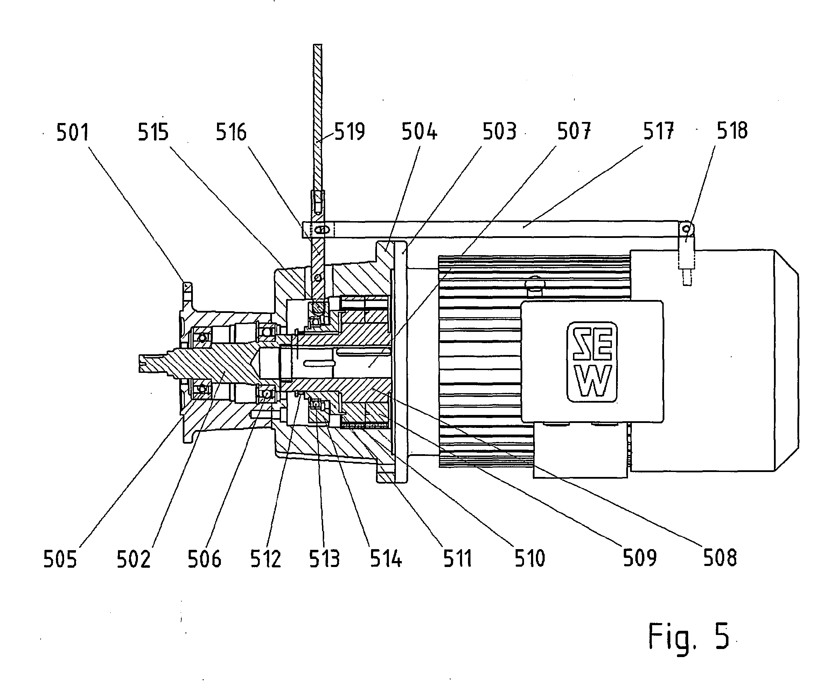

In Figur 5 ist ein weiteres Ausführungsbeispiel gezeigt, bei dem erstes und zweites Kupplungsteil, also Klauenkupplungsteil und Fliehbackenträger einteilig als Fliehbackenträger 508 ausgeführt sind. Somit ist in diesem Fliehbackenträger auch die Kupplungsteil-Funktion integriert.

Der Getriebegehäusedeckel 501 ist mit dem Adaptergehäuseteil 504 lösbar verbunden. Im Getriebegehäusedeckel 501 ist die Adapterwelle 502 über Lager 505 und 506 gelagert. Der Motorflansch 503 ist mit dem Adaptergehäuseteil 504 lösbar verbunden.

Die Fliehbacken 509 mit Bremsbelag 510 sind auf dem Fliehbackenträger 508 vorgesehen. Die Arretierglocke 511 wird wiederum von dem Federelement 512 zur Arretierung in die Fliehbacken 509 gedrückt, abhängig von der Stellung des Schalthebels 516, der an seinem einen Ende mit einer Kugel 515 fest verbunden ist oder ein entsprechend geformtes kugelförmiges Ende aufweist. Mit dieser Kugel greift der Schalthebel 516 in einen über Lager 513 auf dem Schaltkörper gelagerten Ring ein und kann daher eine axiale Bewegung des Schaltkörpers ausführen.

In den Schalthebel 516 ist eine Hebelverlängerung 519 eingeschraubt, die zur Handbetätigung vorteilig ist. Mittels der Koppel 517 ist der Schalthebel mit dem Bremshebel 518 des Motors mit Gelenk gekoppelt.

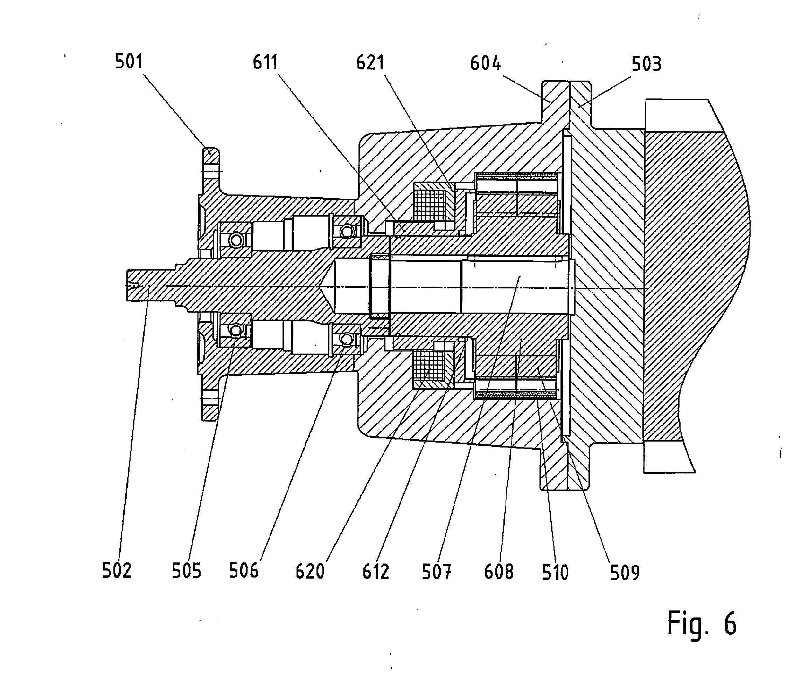

In Figur 6 umfasst das Adaptergehäuseteil 604 eine Spule 620 in einem Spulenkörper 621. Mit dieser Spule ist ein Magnetfeld erzeugbar, welche die Arretierglocke 611 infolge des Reluktanzeffekts in axialer Richtung gegen die Federkraft der Federn 612 bewegbar macht auf dem wiederum einstückig ausgeführten Fliehbackenträger 608.

Somit ist die mechanische Koppelung zwischen Bremse und Fliehkraftkupplung auch ersetzbar durch eine elektronisch ausgeführte Koppelung.

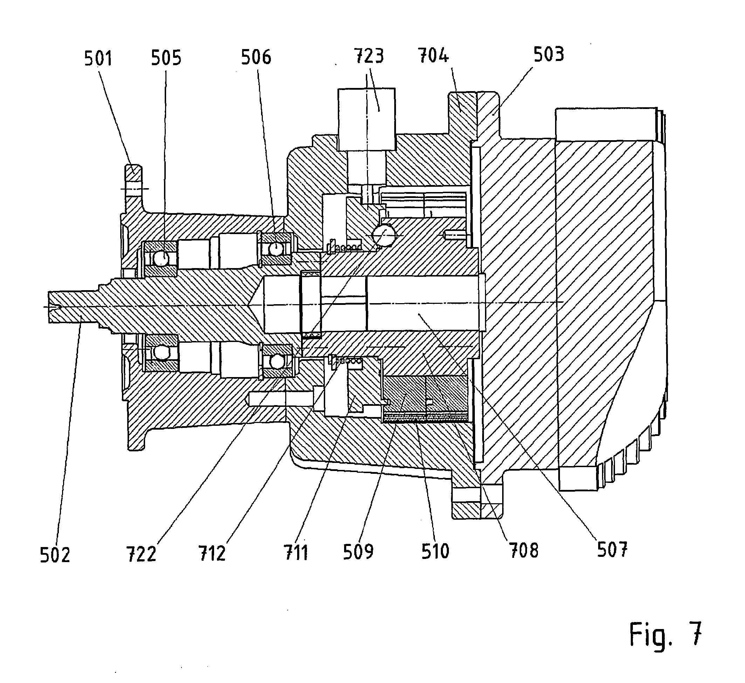

In Figur 7 ist ein weiteres Ausführungsbeispiel gezeigt, bei dem die Ausformung der Arretierglocke 711 derart gewählt ist, dass durch ein Einfahren der Verriegelungseinheit 723 eine axiale Bewegung der Arretierglocke 711 erzeugbar ist gegen die Federn 712. Die Arretierglocke 711 ist mittels einer Mitnehmerkugel 722 im Fliehbackenträger 708 zur Drehmomentübertagung gehalten. Somit ist Drehmoment bis zu einem kritischen Wert übertragbar Ab Überschreiten des kritischen Drehmoment-Wertes rückt die Mitnehmerkugel 722 aus.

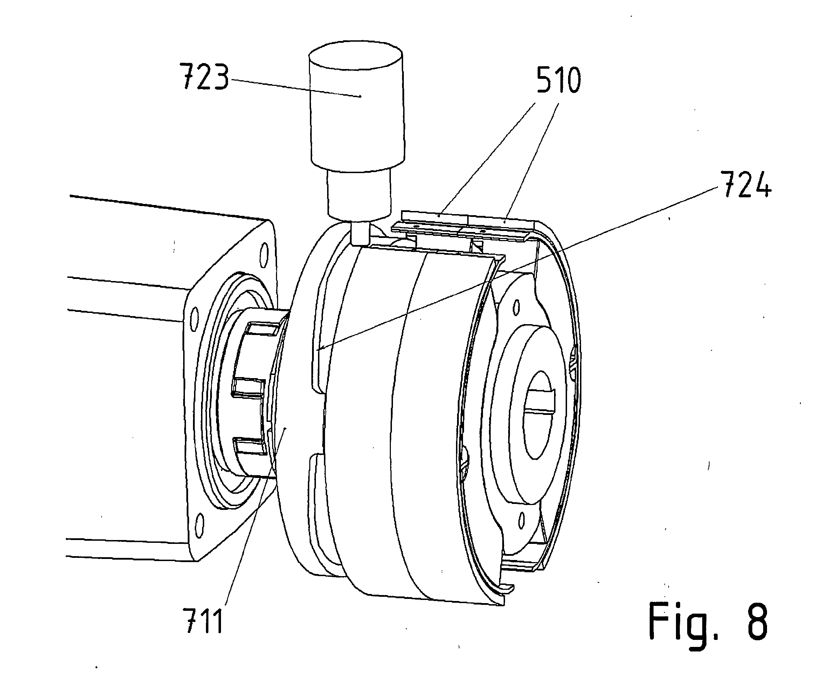

Wie in Figur 8 noch deutlicher gezeigt, wird bei in radialer Richtung eingefahrener Verriegelungseinheit 723 die Arretierglocke 711 in axialer Richtung bewegt, weil die Breite 724 der Arretierglocke am Umfang veränderlich ist und somit beim Drehen der Arretierglocke eine den Federn 712 entgegenwirkende Kraft vorhanden ist.

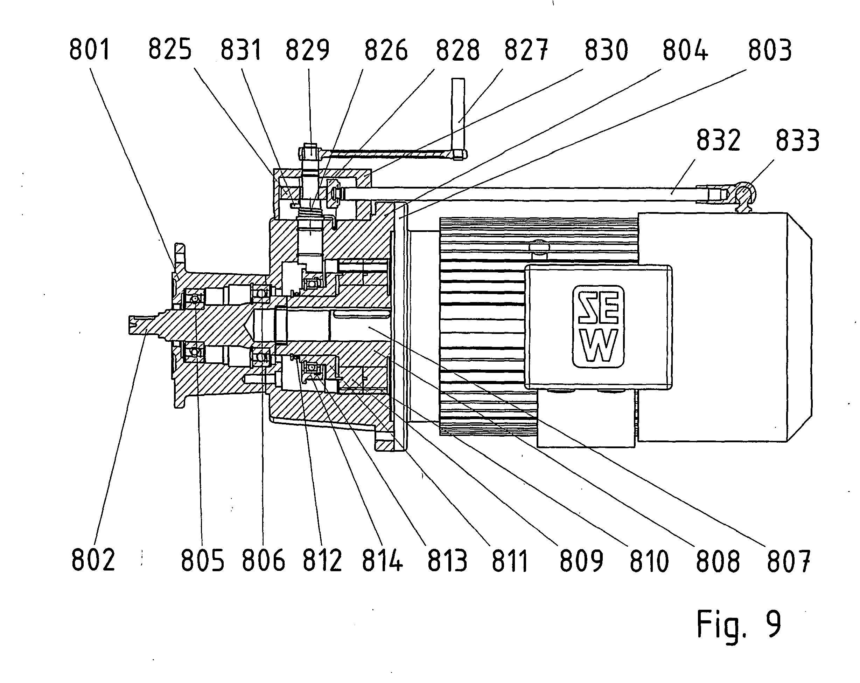

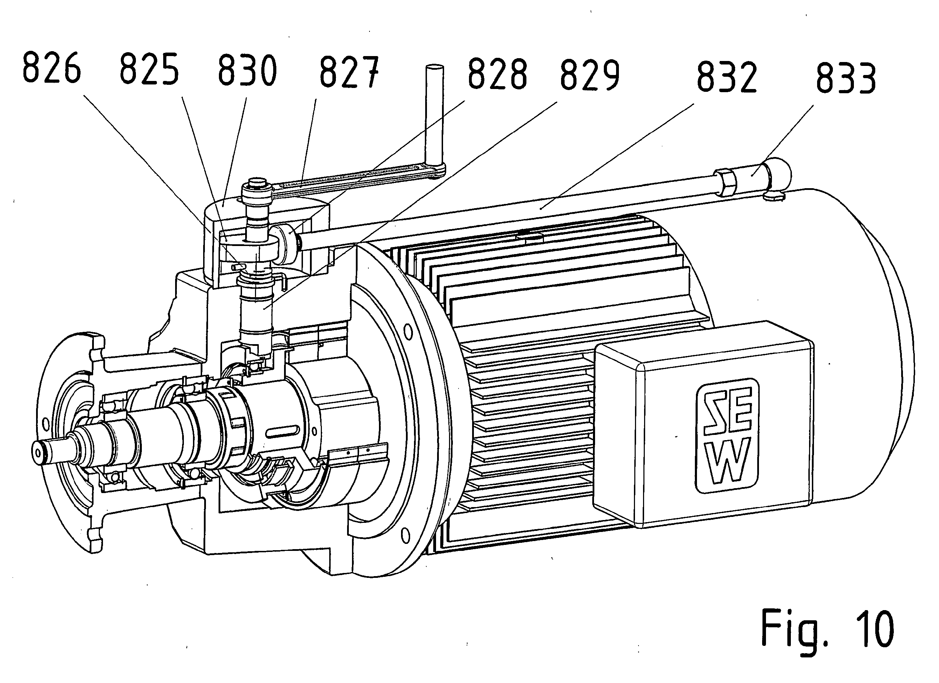

In Figur 9 und 10 ist ein weiteres Ausführungsbeispiel in teilweisem Schnitt gezeigt, bei dem die wiederum im Getriebegehäusedeckel 801 die Adapterwelle 802 über Lager 805 und Lager 806 gelagert ist. Mit dem Motorflansch 803 ist das Adaptergehäuseteil 804 verbunden.

Die Motorwelle 807 ist wiederum mit den Fliehbackenträger 808 verbunden, der mit den Fliehbacken 809 und 810 verbunden ist, für welche das Adaptergehäuseteil 804 als Bremsfläche vorgesehen ist. Zum Bremsen muss die Arretierglocke 811 gegen die Federkraft des Federelements 812 axial bewegt werden. Dazu ist der über Lager 813 an der Arretierglocke 811 gelagerte Schaltkörper 814 axial bewegbar, wenn die Schaltwelle 829 gedreht wird, beispielsweise um 90 °. Die Schaltwelle 829 ist nämlich an ihrem zum Schaltkörper hin zugewandten Ende entsprechend geformt.

Ausgelöst wird die Drehbewegung durch Handbedienung, also durch Drehen am Handhebel 827 mit Griff.

Wenn die Handbedienung beendet ist, wird eine Rückdrehung durch die Schenkel-Feder 826, deren erstes Ende im Adaptergehäuseteil 804 verbunden ist und deren zweites Ende am Bolzen 831 mit der Schaltwelle 829 verbunden ist, bewirkt.

Die Schaltwelle 829 trägt auch eine innerhalb des gehäusebildenden Deckels 830 angeordnete Nocke 825, die derart geformt ist, dass bei Ausführen einer größeren Drehung als der oben genannten, beispielsweise also 180°, die Nocke das Druckstück 828 in B-seitiger Richtung bewegt. Diese Bewegung wird dann mittels der Druckstange 832 und des Gelenks 833 an den Bremshebel der Bremse zum Lüften derselben übertragen.

Die Orientierung und Ausformung des Endes der Schaltwelle 829 bestimmt den Wert desjenigen Drehwinkels, ab welchem die Fliehkraftbremse frei gegeben wird. Die Bremsung erfolgt dann drehzahlabhängig.

Die Orientierung und Ausformung der Nocke 825 bestimmt den Wert desjenigen Drehwinkels, ab welchem die Bremse belüftet wird.

Bei weiteren Ausführungsbeispielen ist auch ein Drehen des Handhebels 827 mittels eines Elektromotors, Schrittmotor oder Stellantrieb möglich.

Die Bremse selbst und auch der Elektromotor ist vorteiligerweise nach den Merkmalen der DE 199 24 735 A1 und/oder nach dem dortig zitierten Stand der Technik ausgeführt, insbesondere Figur 1 entsprechend.

## Patentansprüche

1. Adapter zur Verbindung einer ersten Vorrichtung und einer zweiten Vorrichtung,
wobei eine Welle 8 der ersten Vorrichtung mit einem ersten Kupplungsteil 19 des Adapters formschlüssig und/oder kraftschlüssig verbindbar ist,
wobei das erste Kupplungsteil 19 mit einem zweiten Kupplungsteil 12 zur Drehmomentübertragung zusammenwirkend vorgesehen ist,
wobei eine Adapterwelle 9 mit dem zweiten Kupplungsteil 12 des Adapters formschlüssig und/oder kraftschlüssig verbindbar ist,
wobei das Adaptergehäuse 4 zur ersten Vorrichtung hin eine Schnittstelle aufweist zur lösbaren, zueinander zentrierbaren Verbindung mit dem Gehäuse der ersten Vorrichtung,
wobei das Adaptergehäuse 4 abtriebsseitig eine weitere Schnittstelle 5 aufweist zur lösbaren, zueinander zentrierbaren Verbindung mit einem Gehäuseteil der zweiten Vorrichtung, insbesondere mit einem Getriebe-Gehäusedeckel,
**dadurch gekennzeichnet, dass**
auf dem zweiten Kupplungsteil 12 von Federn 24 zusammengehaltene Fliehbacken 14 am Umfang angeordnet sind, mittels derer bei Überschreiten eines kritischen Wertes an Drehzahl und/oder Zentrifugalkraft ein Bremsbelag 13 auf eine Reibfläche des Adaptergehäuses 4 drückbar ist,
wobei die Fliehbacken 14 derart arretierbar sind, dass der Bremsbelag nur auf die Reibfläche drückt, wenn ein Arretiermittel freigegeben ist und ein kritischer Wert an Drehzahl überschritten ist,
wobei eine Arretierglocke 21 als Arretiermittel mittels eines Hebels und/oder einer Koppel verschiebbar ist,
wobei der Hebel mit einem Bremshebel 2 derart verbunden ist, dass bei Betätigen, insbesondere Drehen, des Bremshebels zuerst die Arretierglocke 21 zum Dearretieren, also Entriegeln, verschiebbar ist und bei weiter fortgesetztem Betätigen, Insbesondere Drehen, ein Lüften der Bremse, insbesondere Motorbremse, ausführbar ist.

2. Adapter nach anspruch 1,
**dadurch gekennzeichnet, dass**
die erste Vorrichtung ein antreibender Elektromotor (1,7) ist und die zweite Vorrichtung ein abtriebsseitig angeordnetes Getriebe.

3. Adapter nach mindestens einem der vorangegangenen Ansprüche,
**dadurch gekennzeichnet, dass**
erstes und zweites Kupplungsteil einstückig ausgeführt sind, also als ein Teil.

4. Adapter nach mindestens einem der vorangegangenen Ansprüche,
**dadurch gekennzeichnet, dass**
die Adapterwelle mit mindestens einem Lager (10,11), insbesondere mit zwei Lagern (10,11), in dem Getriebe-Gehäuseteil, wie Getriebe-Gehäusedeckel 5 oder Getriebe-Gehäuse, gelagert ist und abtriebsseitig mit einem Verzahnungsteil des Getriebes verbindbar ist.

5. Adapter nach mindestens einem der vorangegangenen Ansprüche,
**dadurch gekennzeichnet, dass**
als Arretiermittel eine Arretierglocke 21 vorgesehen ist, die axial verschiebbar angeordnet ist, insbesondere auf einer Hülse, die am Umfang des ersten und zweiten Kupplungsteils (19,12) angeordnet ist.

6. Adapter nach mindestens einem der vorangegangenen Ansprüche,
**dadurch gekennzeichnet, dass**
die Arretierglocke 21 von einer oder mehreren Federn 18 in eine axiale Richtung verschiebbar ist und mittels einer anderen Komponente oder Vorrichtung (16,17,23) in die andere axiale Richtung in die Freigabestellung verschiebbar ist.

7. Adapter nach mindestens einem der vorangegangenen Ansprüche,
**dadurch gekennzeichnet, dass**
die Arretierglocke 21 über ein Lager 16 in einem relativ zum Adaptergehäuse 4 nicht-drehbaren Teil, insbesondere in einem Schaltkörper 17, gelagert ist, wobei dieses nicht-drehbare Teil zusammen mit dem Lager 16 und der Arretierglocke 21 axial verschiebbar angeordnet ist.

8. Adapter nach mindestens einem der vorangegangenen Ansprüche,
**dadurch gekennzeichnet, dass**
das nicht-drehbare Teil mittels eines Bowdenzuges 23 verschiebbar ist.

9. Adapter nach mindestens einem der vorangegangenen Ansprüche,
**dadurch gekennzeichnet, dass**
der Bowdenzug 23 mit einem Bremshebel 2 derart verbunden ist, dass bei Betätigen, insbesondere Drehen, des Bremshebels 2 zuerst die Arretierglocke 21 zum Dearretieren, also Entriegeln, verschiebbar ist und bei weiter fortgesetztem Betätigen, insbesondere Drehen, ein Lüften der Bremse, insbesondere Motorbremse, ausführbar ist.

10. Adapter nach mindestens einem der vorangegangenen Ansprüche,
**dadurch gekennzeichnet, dass**
am ersten Kupplungsteil 19 erste Klauen vorgesehen sind und
am zweiten Kupplungsteil 12 zweite Klauen vorgesehen sind, die mit den ersten Klauen im Eingriff stehen.

11. Getriebemotor,
umfassend zumindest einen Elektromotor (1,2,6,7), einen Adapter nach mindestens einem der vorangegangenen Ansprüche und ein Getriebe,
wobei der Adapter eine Fliehkraftbremse umfasst, wobei dem Bremsbelag eine innerhalb der Innenfläche des Adaptergehäuses vorgesehene Reibfläche zugeordnet ist,
**dadurch gekennzeichnet, dass**
der Elektromotor (1,2,6,7) eine elektromagnetisch betätigbare Bremse, insbesondere Motorbremse, umfasst, die eine Vorrichtung zum Lüften der Bremse, wie Bremshebel 2 oder dergleichen, umfasst,
wobei mittels der Vorrichtung zum Lüften der Bremse auch eine Arretierung der Fliehkraftbremse steuerbar ist.

12. Getriebemotor nach Anspruch 11,
**dadurch gekennzeichnet, dass**
die elektromagnetisch betätigbare Bremse eine Motorbremse ist.

13. Getriebemotor nach Anspruch 11,
**dadurch gekennzeichnet, dass**
die Vorrichtung zum Lüften der Bremse ein Bremshebel ist.

14. Getriebemotor-Baukasten,
wobei mindestens eine Baugröße umfasst ist, die jeweils mindestens zwei Varianten von Getriebemotoren mit Adaptern umfasst,
wobei die erste Variante einen Adapter nach einem der Ansprüche 1 bis 10 derart umfasst, dass ein Arretieren oder Dearretieren ermöglicht ist,
und die zweite Variante einen Adapter nach einem der Ansprüche 1 bis 10, wobei allerdings Ausnehmungen im Adaptergehäuse für Arretiermittel mit Verschlussmitteln verschlossen sind und die Komponenten dearretiert sind.

## Claims

1. An adapter for connecting a first device and a second device,
a shaft 8 of the first device being able to be connected to a first coupling part 19 of the adapter in positive and/or non-positive manner,
the first coupling part 19 being provided to cooperate with a second coupling part 12 for transmitting torque,
an adapter shaft 9 being able to be connected to the second coupling part 12 of the adapter in positive and/or non-positive manner,
the adapter housing 4 having facing the first device an interface for detachable connection, so as to be able to be centred relative to each other, to the housing of the first device,
the adapter housing 4 having on the output side 5 a further interface for detachable connection, so as to be able to be centred relative to each other, to a housing part of the second device, in particular to a gearing housing cover,
**characterised in that**
centrifugal jaws 14 held together by springs 24 are arranged on the periphery on the second coupling part 12, by means of which jaws, upon exceeding a critical value of speed and/or centrifugal force, a brake pad 13 can be pressed against a friction surface of the adapter housing 4,
the centrifugal jaws 14 being able to be locked such that the brake pad only presses against the friction surface if a locking means is released and a critical value of speed is exceeded,
a locking bell 21 as locking means being displaceable by means of a lever and/or a coupler,
the lever being connected to a brake lever 2 such that upon actuation, in particular rotation, of the brake lever first the locking bell 21 is displaceable for unlocking, i.e. unblocking, and if actuation, in particular rotation, is continued further the brake, in particular motor brake, can be released.

2. An adapter according to Claim 1, **characterised in that**
the first device is a driving electric motor (1, 7) and the second device is a gearing arranged on the output side.

3. An adapter according to at least one of the preceding claims, **characterised in that**
the first and second coupling parts are designed in one piece, i.e. as one part.

4. An adapter according to at least one of the preceding claims, **characterised in that**
the adapter shaft is mounted with at least one bearing (10, 11), in particular with two bearings (10, 11), in the gearing housing part, such as gearing housing cover 5 or gearing housing, and can be connected on the output side to a teeth part of the gearing.

5. An adapter according to at least one of the preceding claims, **characterised in that**
a locking bell 21 is provided as locking means, which bell is arranged to be axially displaceable, in particular on a sleeve arranged on the periphery of the first and second coupling parts (19, 12).

6. An adapter according to at least one of the preceding claims, **characterised in that**
the locking bell 21 is displaceable in one axial direction by one or more springs 18 and displaceable into the release position in the other axial direction by means of another component or device (16, 17, 23).

7. An adapter according to at least one of the preceding claims, **characterised in that**
the locking bell 21 is mounted via a bearing 16 in a part which is non-rotatable relative to the adapter housing 4, in particular in a shifting body 17, this non-rotatable part together with the bearing 16 and the locking bell 21 being arranged to be axially displaceable.

8. An adapter according to at least one of the preceding claims, **characterised in that**
the non-rotatable part is displaceable by means of a Bowden cable 23.

9. An adapter according to at least one of the preceding claims, **characterised in that**
the Bowden cable 23 is connected to a brake lever 2 such that upon actuation, in particular rotation, of the brake lever 2 first the locking bell 21 is displaceable for unlocking, i.e. unblocking, and if actuation, in particular rotation, is continued further the brake, in particular motor brake, can be released.

10. An adapter according to at least one of the preceding claims, **characterised in that**
first claws are provided on the first coupling part 19 and
second claws which engage with the first claws are provided on the second coupling part 12.

11. A gear motor,
comprising at least one electric motor (1, 2, 6, 7), an adapter according to at least one of the preceding claims and a gearing,
the adapter comprising a centrifugal brake, a friction surface provided within the inner surface of the adapter housing being associated with the brake pad,
**characterised in that**
the electric motor (1, 2, 6, 7) comprises an electromagnetically actuatable brake, in particular motor brake, which comprises a device for releasing the brake, such as brake lever 2 or the like,
with locking of the centrifugal brake also being able to be controlled by means of the device for releasing the brake.

12. A gear motor according to Claim 11, **characterised in that**
the electromagnetically actuatable brake is a motor brake.

13. A gear motor according to Claim 11, **characterised in that**
the device for releasing the brake is a brake lever.

14. A gear motor module,
at least one size being comprised, which in each case comprises at least two variants of gear motors with adapters,
the first variant comprising an adapter according to one of Claims 1 to 10 such that locking or unlocking is permitted,
and the second variant an adapter according to one of Claims 1 to 10, wherein however recesses in the adapter housing for locking means are closed with closing means and the components are unlocked.

## Revendications

1. Adaptateur conçu pour relier un premier dispositif et un second dispositif,
sachant qu'un arbre (8) du premier dispositif peut être relié, par concordance de formes et/ou mécaniquement, à une première partie d'accouplement (19) dudit adaptateur,
sachant que ladite première partie d'accouplement (19) est prévue pour coopérer avec une seconde partie d'accouplement (12), en vue de la transmission d'un couple de rotation,
sachant qu'un arbre d'adaptateur (9) peut être relié, par concordance de formes et/ou mécaniquement, à ladite seconde partie d'accouplement (12) de l'adaptateur,
sachant que le carter (4) de l'adaptateur offre un interface, vers le premier dispositif, en vue de la liaison libérable, avec faculté de centrage réciproque, avec le carter dudit premier dispositif,
sachant que ledit carter (4) de l'adaptateur offre, côté mené, un autre interface (5) en vue de la liaison libérable, avec faculté de centrage réciproque, avec une partie du carter du second dispositif, en particulier avec un couvercle de carter de transmission,
**caractérisé par**
la présence, sur le pourtour de la seconde partie d'accouplement (12), de mâchoires centrifuges (14) dont la cohésion est assurée par des ressorts (24) et au moyen desquelles, lors d'un dépassement d'une valeur critique de la vitesse angulaire et/ou de la force centrifuge, une garniture de freinage (13) peut être pressée sur une surface de frottement du carter (4) de l'adaptateur,
sachant que lesdites mâchoires centrifuges (14) peuvent être arrêtées de façon telle que ladite garniture de freinage exerce une pression, sur ladite surface de frottement, uniquement lorsqu'un moyen d'arrêt est neutralisé et qu'une valeur critique de la vitesse angulaire est dépassée,
sachant qu'une calotte d'arrêt (21), remplissant la fonction d'un moyen d'arrêt, peut être animée de coulissements à l'aide d'un levier et/ou d'une biellette,
sachant que ledit levier est relié à un levier de freinage (2) de façon telle que, lors d'un actionnement et notamment d'une rotation dudit levier de freinage, ladite calotte d'arrêt (21) puisse être animée de coulissements en vue de la neutralisation de l'arrêt, c'est-à-dire en vue du déverrouillage ; et qu'un désaérage du frein, en particulier du frein moteur, puisse avoir lieu lors d'une poursuite de l'actionnement, en particulier de la rotation.

2. Adaptateur selon la revendication 1,
**caractérisé par le fait que**
le premier dispositif est un moteur électrique entraîneur (1, 7), et le second dispositif est une transmission située côté mené.

3. Adaptateur selon au moins l'une des revendications précédentes,
**caractérisé par le fait que**
les première et seconde parties d'accouplement sont de réalisation monobloc, c'est-à-dire d'une seule pièce.

4. Adaptateur selon au moins l'une des revendications précédentes,
**caractérisé par le fait que**
l'arbre d'adaptateur est monté par au moins un palier (10, 11), notamment par deux paliers (10, 11), dans la partie de carter de transmission telle qu'un couvercle (5) du carter de transmission ou ledit carter de transmission ; et peut être relié, côté mené, à une partie dentée de ladite transmission.

5. Adaptateur selon au moins l'une des revendications précédentes,
**caractérisé par le fait**
**qu'**une calotte d'arrêt (21), prévue en tant que moyen d'arrêt, est agencée à coulissement axial, en particulier sur une douille disposée sur le pourtour des première et seconde parties d'accouplement (19, 12).

6. Adaptateur selon au moins l'une des revendications précédentes,
**caractérisé par le fait que**
la calotte d'arrêt (21) peut être animée de coulissements dans une direction axiale, par un ou plusieurs ressort(s) (18) ; et peut être amenée à la position de libération par coulissement dans l'autre direction axiale, au moyen d'un autre élément constitutif ou d'un autre dispositif (16, 17, 23).

7. Adaptateur selon au moins l'une des revendications précédentes,
**caractérisé par le fait que**
la calotte d'arrêt (21) est montée, par l'intermédiaire d'un palier (16), dans une pièce non rotative par rapport au carter (4) de l'adaptateur, en particulier dans un organe de commutation (17), cette pièce non rotative étant agencée à coulissement axial conjointement audit palier (16) et à ladite calotte d'arrêt (21).

8. Adaptateur selon au moins l'une des revendications précédentes,
**caractérisé par le fait que**
la pièce non rotative peut être animée de coulissements au moyen d'une tringlerie Bowden (23).

9. Adaptateur selon au moins l'une des revendications précédentes,
**caractérisé par le fait que**
la tringlerie Bowden (23) est reliée à un levier de freinage (2) de façon telle que, lors d'un actionnement et notamment d'une rotation dudit levier de freinage, ladite calotte d'arrêt (21) puisse être animée de coulissements en vue de la neutralisation de l'arrêt, c'est-à-dire en vue du déverrouillage ; et qu'un désaérage du frein, en particulier du frein moteur, puisse avoir lieu lors d'une poursuite de l'actionnement, en particulier de la rotation.

10. Adaptateur selon au moins l'une des revendications précédentes,
**caractérisé par le fait que**
des premières griffes sont prévues sur la première partie d'accouplement (19) et
des secondes griffes, en prise avec lesdites premières griffes, sont prévues sur la seconde partie d'accouplement (12).

11. Electroréducteur
comprenant au moins un moteur électrique (1, 2, 6, 7), un adaptateur selon au moins l'une des revendications précédentes, et une transmission,
ledit adaptateur incluant un frein centrifuge, sachant qu'une surface de frottement, prévue dans la surface intérieure du carter de l'adaptateur, est associée à la garniture de freinage,
**caractérisé par le fait que**
le moteur électrique (1, 2, 6, 7) englobe un frein actionnable électromagnétiquement, en particulier un frein moteur qui renferme un dispositif de désaérage du frein, tel qu'un levier de freinage (2) ou élément similaire,
sachant qu'un arrêt dudit frein centrifuge peut également être commandé au moyen dudit dispositif de désaérage du frein.

12. Electroréducteur selon la revendication 11,
**caractérisé par le fait que**
le frein actionnable électromagnétiquement est un frein moteur.

13. Electroréducteur selon la revendication 11,
**caractérisé par le fait que**
le dispositif de désaérage du frein est un levier de freinage.

14. Ensemble modulaire d'électroréducteurs,
incluant au moins une taille de réalisation englobant, à chaque fois, au moins deux variantes d'électroréducteurs équipés d'adaptateurs,
la première variante comprenant un adaptateur selon l'une des revendications 1 à 10, de manière à autoriser un arrêt ou une neutralisation de l'arrêt,
et la seconde variante comprenant un adaptateur selon l'une des revendications 1 à 10, sachant toutefois que des évidements, pratiqués dans le carter dudit adaptateur et affectés à des moyens d'arrêt, sont obturés par des moyens obturateurs, et que les éléments constitutifs sont déverrouillés.
